# EUROPEAN PATENT SPECIFICATION

(11) **EP 1 250 823 B1**
(45) Date of publication and mention of the grant of the patent: **19.10.2005**
(21) Application number: 00989606.9
(22) Date of filing: 29.12.2000
(51) Int. Cl.: H04Q 7/30

(54) **HYBRID CELLULAR NETWORK SYSTEM AND COMMUNICATIONS METHOD**
HYBRIDES ZELLULARES KOMMUNIKATIONSSYSTEM UND KOMMUNIKATIONSVERFAHREN
SYSTEME DE RESEAU CELLULAIRE HYBRIDE ET PROCEDE DE COMMUNICATIONS

(30) Priority: 30.12.1999 US 476218
(43) Date of publication of application: 23.10.2002
(73) Proprietor: QUALCOMM INCORPORATED, San Diego, CA 92121-1714 (US)
(72) Inventor: NEVO, Ron, Beaverton, Oregon (US); VAKULENKO, Michael, 35849 Haifa (IL); KOLOR, Sergio, 32922 Haifa (IL); NIZRI, Shlomo, 31999 Haifa (IL); LEVY, Atai, 34612 Haifa (IL); BENCHETRIT, Uri, 34987 Haifa (IL); KESSLER, Ilan, 34602 Haifa (IL); SHINDELMAN, Dror, 32984 Haifa (IL); ZIV, Noam, Abraham, Solana Beach, CA 92075 (US)
(74) Representative: Walsh, Michael Joseph
(86) International application number: PCT/US2000/035638
(87) International publication number: WO 2001/050795

(56) References cited:
- WO-A-98/37721
- WO-A-99/25143
- GB-A- 2 320 653
- HUSAIN S S ET AL: "INTELLIGENT NETWORK: A KEY PLATFORM FOR PCS INTERWORKING AND INTEROPERABILITY" IEEE COMMUNICATIONS MAGAZINE,US,IEEE SERVICE CENTER. PISCATAWAY, N.J, vol. 34, no. 9, 1 September 1996 (1996-09-01), pages 98-105, XP000627242 ISSN: 0163-6804

## Description

### FIELD OF THE INVENTION

The present invention relates generally to wireless telecommunications, and specifically to advanced cellular telephone networks.

### BACKGROUND OF THE INVENTION

The Global System for Mobile (GSM) telecommunications is used in cellular telephone networks in many countries around the world. GSM standards define communication protocol stacks, built on a time-division multiple access (TDMA) physical layer, which are used in conveying signaling and user traffic between elements of the network. These elements include subscriber units (known as mobile stations - MSs) and base station subsystems (BSSs). The standard GSM network protocol is known as GSM-MAP (Mobile Application Protocol), and the interface between the BSSs and the network is known as the GSM A-Interface.

Code-division multiple access (CDMA) is an improved digital communications technology, which affords more efficient use of radio bandwidth than TDMA, as well as a more reliable, fade-free link between cellular telephone subscribers and base stations. The leading CDMA standard is TIA/EIA-95 (commonly referred to as IS-95), promulgated by the Telecommunications Industry Association (TIA). IS-95 defines its own protocol stacks, built on a CDMA physical layer and a signaling model for call processing that is compatible with the TIA/EIA-41 (IS-41) network standard. The interface between CDMA BSSs and the network is defined by the TIA/EIA-634 (IS-634) standard.

Because the IS-95 CDMA air interface is based on fundamentally different technology from the GSM TDMA interface, there are substantial differences between the conventional IS-95 and GSM protocol stacks, as well as between GSM and CDMA-oriented network standards, such as IS-41.

PCT patent application PCT/US96/20764, which is incorporated herein by reference, describes a wireless telecommunications system that uses a CDMA air interface to implement GSM network services and protocols. Using this system, some or all of the TDMA base stations and subscriber units of an existing GSM network are replaced or supplemented by corresponding CDMA equipment. CDMA BSSs in this system are adapted to communicate with a GSM network via a standard GSM A-interface. The core of GSM network services is thus maintained, and the changeover from TDMA to CDMA is largely transparent to users. A system of this type, in which GSM protocols are implemented over a CDMA air interface, is referred to in the present patent application as a GSM-CDMA system.

Hybrid cellular communications networks, incorporating both GSM and CDMA elements, are also described in PCT patent publications WO 95/24771 and WO 96/21999, and in an article by Tscha, et al., entitled "A Subscriber Signaling Gateway between CDMA Mobile Station and GSM Mobile Switching Center," in Proceedings of the 2nd International Conference on Universal Personal Communications, Ottawa (1993), pp. 181-185. None of these references, however, relates to the question of maintaining or adding IS-95/IS-41 or other non-GSM network services in the context of the hybrid GSM-CDMA network.

UK Patent Publication No. GB 2,320,653 of "Northern Telecom Limited" discloses an arrangement and method for controlling communication between mobile station and a base station in a mobile communication network. US Patent No. US 5, 664, 004 of "Nokia Telecommunications OY" discloses a mobile radio system supporting multiple radio interfaces over a single signalling interface in a GSM (Global System for Mobile Communication) communication network. US Patent No. US 5, 732, 076 of "Omnipoint Corporation" discloses an integrated communication system supporting multiple communication protocols in a time division multiple access (TDMA) network.

### SUMMARY OF THE INVENTION

It is an object of some aspects of the present invention to provide methods and apparatus for supporting IS-95 communication protocols in coexistence with a hybrid GSM-CDMA cellular communications network.

It is a further object of some aspects of the present invention to provide a hybrid cellular base station capable of supporting mobile stations operating in accordance with multiple protocols and/or network standards.

In preferred embodiments of the present invention, a GSM-CDMA cellular communications system includes a hybrid base station subsystem (BSS), having multiple network interfaces so as to communicate both with a GSM network and with one or more networks operating according to other standards, preferably including the IS-41 standard. The hybrid BSS has a CDMA air interface that simultaneously serves both GSM-CDMA MSs and other MSs compatible with different CDMA protocol standards, preferably compatible with IS-95. The GSM-CDMA MSs communicate with the hybrid BSS using GSM protocols over a CDMA physical layer, as described, for example, in a U.S. patent application entitled "Improved Base Station Handover in a Hybrid GSM-CDMA Network," filed 20 July 1998, U.S. Application Serial No. 09/119,717, which is assigned to the assignee of the present patent application.

The present invention thus allows GSM network services to be offered over a CDMA-based air interface, without requiring that all of the CDMA MSs be GSM-CDMA-compatible. Subscribers whose MSs support GSM-CDMA protocols are able to communicate with the GSM network, while coexisting IS-95 MSs communicate with the IS-41 or other network. Compatibility with existing IS-95 MSs is thus maintained.

Preferably, the GSM-CDMA and IS-95 MSs coexist in the same cell or cells served by the hybrid BSS and share a common CDMA frequency. During dedicated mode operation (i.e., during a call), the GSM-CDMA and IS-95 MSs communicate over different, dedicated traffic channels, which are coupled via the hybrid BSS to the respective networks. In idle mode (while waiting to make or receive a call), however, the GSM-CDMA and IS-95 MSs preferably share a common synchronization channel and, most preferably, common paging channels in relation to the BSS. But the different types of MSs respond to different messages on the synchronization and /or paging channels, dependent on their respective network standards and protocols.

There is therefore provided, in accordance with a preferred embodiment of the present invention, in a mobile wireless telecommunications system, a base station subsystem, including:
at least one base station transceiver, which communicates over an air interface with a plurality of mobile stations operating in accordance with a plurality of different protocol standards, including at least one first mobile station operating in accordance with a first protocol standard and at least one second mobile station operating in accordance with a second protocol standard; and
a paging/access manager, which for each call between the base station subsystem and one of the mobile stations routes the call via a network responsive to the protocol standard of the mobile station.

Preferably, the base station subsystem includes a plurality of call processing units, which couple the base station subsystem to a plurality of networks in accordance with different, respective interface standards. Further preferably, the paging/access manager determines the respective protocol standards of mobile stations placing calls via the base station subsystem and routes the calls accordingly to call processing units that are associated with the respective protocol standards.

In a preferred embodiment, the plurality of networks includes a GSM-MAP network and an IS-41 network, and the respective interface standards include a GSM A-interface and an IS-634 standard. Additionally or alternatively, the plurality of networks includes a public switched telephone network, and the respective interface standard preferably includes a V 5.x standard.

Preferably, the air interface includes a CDMA-based air interface. Most preferably, the first protocol standard includes an IS-95 standard, and the second protocol standard is based on GSM networking protocols. In a preferred embodiment, the base station subsystem transmits a CDMA message, which is received and decoded by both the first and second mobile stations in idle mode, and a further GSM-CDMA message, which is received and decoded only by the second mobile station.

In another preferred embodiment, the first protocol standard includes a CDMA2000 standard, and the second protocol standard includes a WCDMA standard.

Preferably, the at least one base station transceiver supports at least one cell on which both the first and second mobile stations camp. Most preferably, a common frequency assignment is used for the first and second mobile stations in the cell, as well as a common synchronization channel and a common paging channel.

There is also provided, in accordance with a preferred embodiment of the present invention, in a mobile wireless telecommunications system, including a plurality of mobile stations operating in accordance with a plurality of different protocol standards, a method for communicating with the mobile stations, including:
initiating a call between a base station subsystem and one of the plurality of mobile stations; and
routing the call between the base station and a network in communication with the base station, responsive to the protocol standard of the mobile station.

Preferably, routing the call includes determining the protocol standard of the mobile station and selecting the one of a plurality of networks responsive to the determination. Preferably, selecting the one of the plurality of networks includes selecting a GSM-MAP or, additionally or alternatively, an IS-41 network, and routing the call comprises routing a call via a GSM A-interface or routing the call via an IS-634 interface. In a preferred embodiment, selecting the one of the plurality of networks includes selecting a public switched telephone network and, preferably, routing the call via a V 5.x interface.

Preferably, initiating the call includes placing a call over a CDMA-based air interface. Preferably, placing the call includes placing a call in accordance with an IS-95 protocol standard or, alternatively or additionally, placing a call based on GSM networking protocols. In a preferred embodiment, placing the call includes placing a call in accordance with a CDMA2000 protocol standard and/or with a WCDMA protocol standard.

There is further provided, in accordance with a preferred embodiment of the present invention, in a mobile wireless telecommunications system, including a plurality of mobile stations operating in accordance with a plurality of interface standards, which mobile stations include at least one first mobile station operating in accordance with a first protocol standard and at least one second mobile station operating in accordance with a second protocol standard, a method for communicating with the mobile stations, including transmitting signals to at least one cell on which both the first and second mobile stations camp.

Preferably, transmitting the signals includes using a common frequency assignment for the first and second mobile stations in the cell. Additionally or alternatively, transmitting the signals includes using a common synchronization channel and, preferably, using a common paging channel for the first and second mobile stations in the cell.

Preferably, transmitting the signals includes transmitting over a CDMA-based air interface. Most preferably, the first protocol standard includes an IS-95 standard, and the second protocol standard is based on GSM networking protocols. Alternatively, the first protocol standard includes a CDMA2000 standard, and the second protocol standard includes a WCDMA standard.

The present invention will be more fully understood from the following detailed description of the preferred embodiments thereof, taken together with the drawings in which:

### BRIEF DESCRIPTION OF THE DRAWINGS

Fig. 1 is a schematic block diagram of a hybrid GSM-CDMA base station subsystem, in communication with multiple mobile stations and networks, in accordance with a preferred embodiment of the present invention;
Fig. 2 is a schematic block diagram illustrating communication protocol stacks between the hybrid BSS and the MSs of Fig. 1, in accordance with a preferred embodiment of the present invention;
Fig. 3 is a flow chart that schematically illustrates a process of cell selection and camping by an MS in communication with the BSS of Fig. 1, in accordance with a preferred embodiment of the present invention; and
Fig. 4 is a schematic block diagram of a hybrid base station subsystem, in communication with multiple mobile stations and networks, in accordance with an alternative preferred embodiment of the present invention.

### DETAILED DESCRIPTION OF PREFERRED EMBODIMENTS

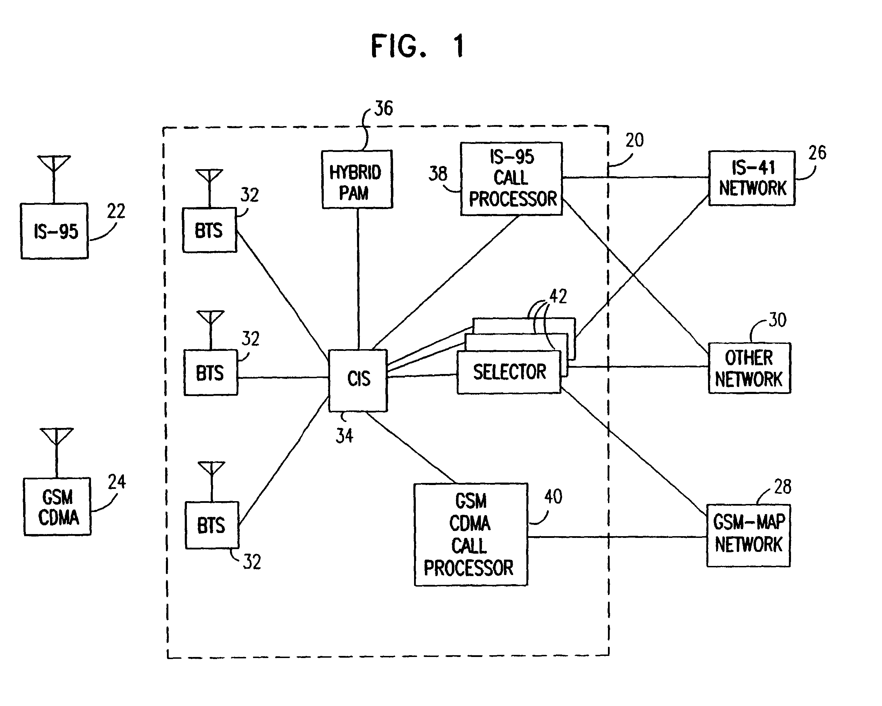

Reference is now made to Fig. 1, which is a schematic block diagram of a hybrid GSM-CDMA base station subsystem (BSS) 20, in communication with mobile stations (MSs) 22 and 24 and with networks 26, 28 and 30, in accordance with a preferred embodiment of the present invention. GSM-MAP network 28 comprises a public land mobile network based on GSM communications standards, and IS-41 network 26 operates in conjunction with standards defined for use with CDMA communications, as described above.

Network 30 may operate in accordance with any suitable network standard known in the art, including standards not specifically designed for mobile communications. In a preferred embodiment of the present invention, network 30 comprises a public switched telephone network (PSTN). The interface between BSS 20 and network 30 is defined in accordance with one of the V 5.x standards promulgated by ETSI, such as V 5.1 or V 5.2. Alternatively, network 30 and the interface thereto may be defined in accordance with other standards known in the art, such as GR 3.03 or "Generic C." Although only one "other network" is shown in Fig. 1, it will be understood that BSS 20 can be configured to communicate with greater numbers of such other networks, as well as with multiple GSM-MAP and IS-41 networks.

MSs 22 and 24 communicate with BSS 20 over a wireless RF link using an IS-95 CDMA physical layer, in one or more of the accepted cellular communications frequency bands. MS 22 operates in accordance with substantially standard IS-95 protocols, most preferably in accordance with the IS-95B standard. MS 24 communicates with BSS 32 using GSM protocols over a CDMA physical layer compatible with IS-95, as described further below. Although for the sake of clarity, only one each of MSs 22 and 24 is shown in Fig. 1, it will be understood that in actuality, BSS 20 generally communicates simultaneously with a plurality of each of these types of MS. A typical cellular communications system will include many BSSs of the type described herein.

BSS 20 is built around a cell interconnect switch (CIS) 34, which controls and communicates with a number of base station transceivers (BTS) 32. Each BTS transmits RF signals to and receives RF signals from MSs 22 and 24 when the MSs are within a geographical area, or cell, served by the particular BTS. Each cell and each CDMA frequency (as defined by IS-95 standards) preferably serves both IS-95 MS 22 and GSM-CDMA MS 24. Alternatively, different cells and/or different CDMA frequencies may be assigned for the two types of service. In idle mode, MSs 22 and 24 each attempt to identify and "camp on" a suitable cell that provides a strong signal and high likelihood of successfully opening a traffic channel to BSS 20 when required. Idle mode treatment in a hybrid GSM-CDMA system is described generally in Israel Patent Application 126,869, which is assigned to the assignee of the present patent application. Aspects of idle mode handling that are specifically relevant to hybrid BSS 20 are described further below.

In order for one of the MSs 22 or 24 to initiate a call, the MS sends an appropriate access request to BSS 20, in accordance with respective IS-95 and GSM-CDMA protocols. CIS 34 passes the request to a hybrid paging/access manager (PAM) 36, which analyzes the request so as to determine to which of networks 26, 28, 30 the call should be routed. The choice of routing depends on the identity and program parameters of the MS and, optionally, a network preference indicated by a user of the MS.

Based on the determination made by PAM 36, CIS routes the call for processing to one of the call signaling processors 38 or 40. Calls by IS-95 MS 22 are routed to IS-95 call processor 38, which sets up a traffic channel to IS-41 network 26, as is known in the art. Calls by GSM-CDMA MS 24 are preferably routed to a GSM-CDMA call processor 40, which is compatible with GSM signaling and sets up a traffic channel to GSM-MAP network 28, as is likewise known in the art. Alternatively, if MS 24 has suitable software, the user of the MS may choose to place the call through IS-41 network 26, in which case the call is routed to call processor 38. Under some circumstances, such as a fault in GSM-MAP network 28, calls may be routed automatically from MS 24 through call processor 38. Preferably, call processor 38 is also used to set up traffic channels to other networks 30. After set-up, PAM 36 informs the MS of its traffic channel assignment, and the call proceeds via a selector 42.

The signaling interfaces between call processors 38 and 40 and respective networks 26 and 28 are preferably respectively in accordance with the IS-634 and GSM A-interfaces standards described hereinabove. Some aspects of the operation of these interfaces, as well as message flow through the GSM A-interface, are described in greater detail in U.S. patent application entitled "Base Station Handover in a Hybrid GSM/CDMA Network, U.S. Application Serial No. 09/119,717, filed 20 July, 1998 and assigned to the assignee of the present application. Alternatively, any other suitable interface types known in the art may be used in communications between call processors 38 and 40 and networks 26, 28 and 30.

Operation of each of the traffic channels is managed by selector 42, which performs tasks such as vocoding and controlling signal power level. Since in CDMA operation, MSs 22 and 24 may communicate simultaneously with two or more BTSs 32, selector 42 also chooses and transmits to the network the best copy of any traffic frame arriving from the BTSs.

Paging of MSs 22 and 24 is initiated in response to paging signals received from respective networks 26 and 28. Other networks 30, however, such as the PSTN, mentioned above, may not inherently support mobility of subscriber units (i.e., MSs 22 and 24), and are therefore not capable of generating paging signals. In such cases, paging is preferably generated by call processor 38 in response to an incoming call from network 30.

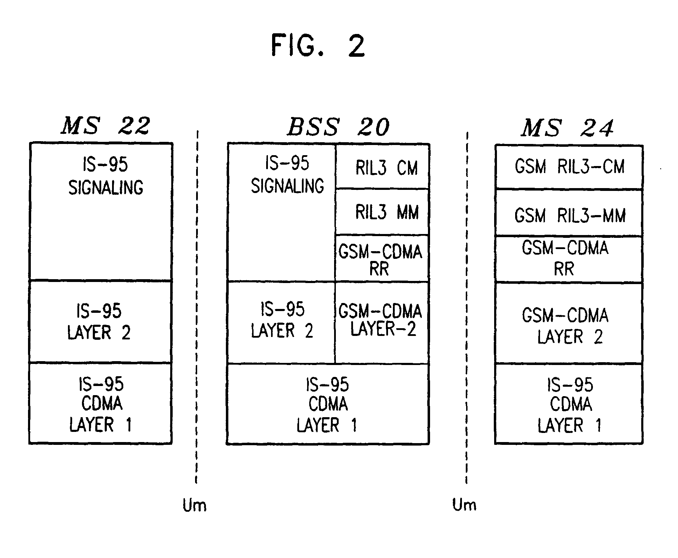

Fig. 2 is a block diagram that schematically illustrates protocol stacks used in signaling interfaces between MSs 22 and 24 and GSM-CDMA BSS 20, in accordance with a preferred embodiment of the present invention. Communications between MS 22 and BSS 20 are substantially in accordance with a standard IS-95 interface, based on a CDMA physical layer (Layer 1) and data link layer (Layer 2), which support a standard IS-95 radio interface/signaling layer. If MS 24 places or receives a call through IS-41 network 26, this protocol stack is also used.

Generally, however, MS 24 exchanges signals with BSS 20 using a hybrid GSM-CDMA protocol stack, based on the same CDMA IS-95 physical layer (Layer 1) as is used by MS 22. Details of the protocol layers are described in the above-mentioned U.S. patent application entitled "Base Station Handover in a Hybrid GSM-CDMA Network,"U.S. Application Serial No. 09/119,717, filed 20 July, 1998 and assigned to the assignee of the present application. The upper layer of the protocol stack is compatible with the GSM Radio Interface Layer 3 (RIL3), which includes radio resource management (RR), mobility management (MM) and call management (CM) sublayers. The RR sublayer and a GSM-CDMA data link layer (Layer 2) are modified so as to accommodate both standard IS-95 signaling and special GSM-CDMA messages, as described in the above-mentioned U.S. patent application.

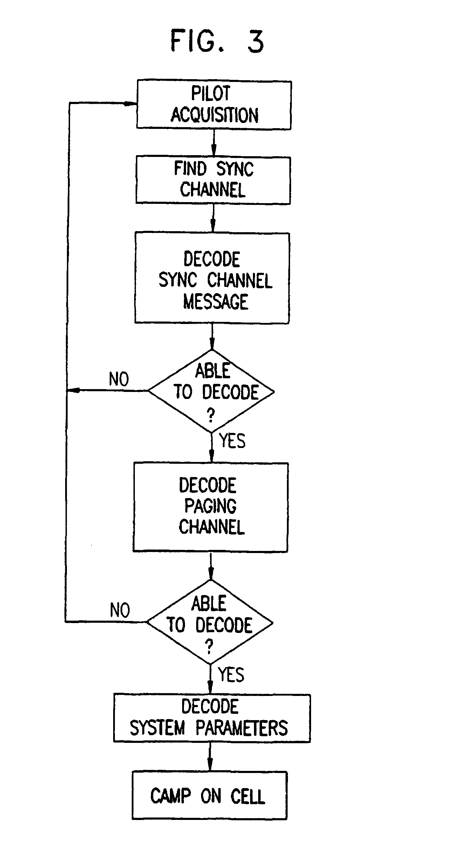

Fig. 3 is a flow chart that schematically illustrates an idle mode process followed by MSs 22 and 24 to select and camp on a cell associated with one of BTSs 32, in accordance with a preferred embodiment of the present invention. In this embodiment, MS 22 and MS 24 share common synchronization (sync) and paging channels, on which the BTS transmits respective sync and paging messages. These messages, to be decoded by the MSs, include both standard IS-95 interface information and additional information required only for GSM-CDMA operation. Only GSM-CDMA MS 24 is able to decode the additional information, which comprises overhead information provided by GSM standards and is consequently ignored by IS-95 MS 22.

In search for a cell to camp on, MSs 22 and 24 first acquire a pilot signal from BTS 32 and then attempt to find and identify the BTS sync channel. BTS 32 transmits two messages over the sync channel: a standard IS-95 sync channel message and a special GSM-CDMA sync channel message. The IS-95 message can be decoded by both MS 22 and MS 24, but the GSM-CDMA message is decoded only by MS 24. Therefore, in order to avoid transmitting duplicate information, the GSM-CDMA message preferably includes only the additional information that is not already present in the IS-95 message. Alternatively, the GSM-CDMA message may include all of the relevant sync channel information. In any case, if either MS 22 or 24 is unable to decode the sync message or messages, it searches for another cell.

After decoding the sync message or messages, MSs 22 and 24 go on to decode the corresponding paging channel. In the case of IS-95, the paging channel message contains IS-95 System Parameters, and is preferably decoded by both MSs 22 and 24. As in the case of the sync messages, the paging channel messages preferably include an additional message decoded only by MS 24, containing special GSM-CDMA System Information, such as GSM location area and cell ID of the cell issuing the message. If MS 22 or 24 is unable to decode the paging channel, it returns to search for another cell.

Once the System Parameters and, as appropriate, GSM-CDMA System Information have been successfully decoded, MS 22 or 24 camps on the cell to which the sync and paging channels belong. Thus, the cell supports a condition of "full coexistence," in which both standard IS-95 MSs and special GSM-CDMA MSs can camp on and receive messages in the same cell. Such full coexistence ensures that system resources are used efficiently, since for a given cell, all MSs are supported on a single CDMA frequency, using the same sync and paging channels.

The paging messages transmitted by BSS 20 preferably include substantially all paging channel overhead messages defined in the IS-95 standard, for example:
- System Parameters (as described above).
- Access Parameters message.
- CDMA Channel List message.
- Extended System Parameters message.
- Neighbor List message.
- Extended Neighbor List message.
- General Neighbor List message.

The messages also include GSM-CDMA messages, intelligible only to MS 24, including:
- GSM System Information message (as described above).
- GSM Neighbor List message.
Preferably, the GSM-CDMA messages transmitted over both the sync and paging channels include a unique identifier, such as a MSG_TYPE field, which allows them to be distinguished from ordinary IS-95 messages.

To initiate a call, BSS 20 transmits IS-95 General Page messages in order to page MS 22, and special GSM-CDMA Paging Request messages to page MS 24. After paging, different types of dedicated channels are set up for the IS-95 and GSM-CDMA MSs. Although both types of dedicated channels are based on the IS-95 physical layer, they use different signaling protocols and identify accordingly the respective types of MS that they serve. BSS 20 preferably supports both types of dedicated channel in substantially every cell.

In other preferred embodiments of the present invention, IS-95 MS 22 and GSM-CDMA MS 24 do not share the same cells, but rather use separate, overlapping cells. In one such embodiment, the sync channel message in a GSM-CDMA cell is not compatible with the standard IS-95 sync message, because the GSM-CDMA sync message has a different MSG_TYPE field, for example. MS 22 is unable to decode the sync message, and therefore leaves the cell.

In another such embodiment, both MSs 22 and 24 can decode the sync channel message in the GSM-CDMA cell, but only MS 24 can decode the paging message and read the System Information. In this case, too, MS 22 will leave the cell. Alternatively, the sync message may redirect MS 22 to another paging channel that complies with the IS-95 standard. The load on the paging channel that is used for GSM-CDMA communications is thus reduced.

Although preferred embodiments are described hereinabove with reference to a particular hybrid GSM-CDMA system, it will be appreciated that the principles of the present invention may similarly be applied to signaling in other hybrid communication systems, as well. Moreover, although the preferred embodiments make reference to specific TDMA- and CDMA-based communications standards, those skilled in the art will appreciate that the methods and principles described hereinabove may also be used in conjunction with other methods of data encoding and signal modulation.

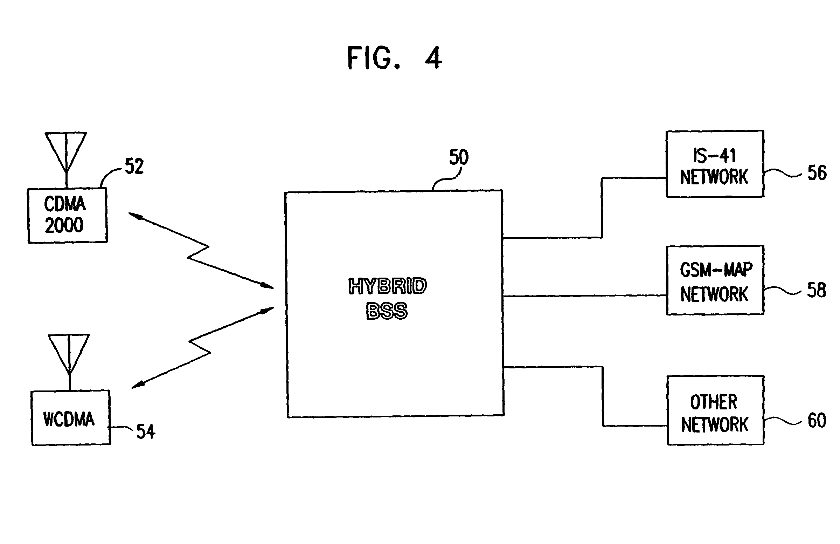

Fig. 4, for example, is a schematic block diagram showing a hybrid BSS 50 in communication with diverse MSs 52 and 54 and networks 56, 58 and 60, in accordance with an alternative preferred embodiment of the present invention. In this example, MS 52 operates over an air interface compliant with CDMA2000, a third-generation cellular communications standard, which is based generally on the IS-95C standard and is backward-compatible with current IS-95 standards. MS 54 operates over an air interface based on the WCDMA standard proposed by ETSI, which is similarly a third-generation standard (also known as UMTS), based on GSM networking protocols with a CDMA physical layer. BSS 50 has an internal structure that is similar to that of BSS 20, shown in Fig. 1. It routes calls between each of MSs 52 and 54 and the appropriately-selected network, which in the present example include IS-41 network 56, GSM-MAP network 58 and another network 60, such as a PSTN. As in the case of MS 22 and MS 24 described hereinabove, CDMA2000 MS 52 and WCDMA MS 54 preferably coexist in a common cell of BSS 50.

The scope of the present invention encompasses not only the complete systems and communications processes described hereinabove, but also various innovative elements of these systems and processes, as well as combinations and sub-combinations thereof. It will thus be appreciated that the preferred embodiments described above are cited by way of example, and the full scope of the invention is limited only by the claims.

## Claims

1. A base station subsystem for use in a mobile wireless telecommunications system, **characterized in that** the subsystem comprises:
at least one base station transceiver (32), which communicates over a CDMA-based air interface with a plurality of mobile stations (22, 24; 52, 54) operating in accordance with a plurality of different protocol standards, including at least one first mobile station (22; 52) operating in accordance with a first protocol standard and at least one second mobile station (24; 54) operating in accordance with a second protocol standard; and
a paging/access manager (36), which for each call between the base station subsystem (20; 50) and one of the mobile stations (22, 24; 52, 54) routes the call via a network (26, 28, 30; 56, 58, 60) responsive to the protocol standard of the mobile station, (22, 24; 52, 54), a common synchronization channel and a common paging channel being used for the first and secod mobile stations (22, 24; 52, 54) in at least one cell to support a condition in which both the first and second mobile stations (22, 24; 52, 54) camp on said at least one cell.

2. A base station subsystem according to claim 1, comprising a plurality of call processing units (38, 40, 42), which couple the base station subsystem (20; 50) to a plurality of networks (26, 28, 30; 56, 58, 60) in accordance with different, respective interface standards.

3. A base station subsystem according to claim 2, wherein the paging/access manager (36) determines the respective protocol standards of mobile stations (22, 24, 52, 54) placing calls via the base station subsystem (20; 50), and routes the calls accordingly to call processing units, (38, 40, 42) that are associated with the respective protocol standards.

4. A base station subsystem according to claim 2, wherein the plurality of networks (26, 28, 30; 56, 58, 60) comprises a GSM-MAP network (28; 58)

5. A base station subsystem according to claim 4, wherein the interface standards include a GSM A-interface standard.

6. A base station subsystem according to claim 2, wherein the plurality of networks (26, 28, 30; 56, 58, 60) comprises an IS-41 network (26; 56).

7. A base station subsystem according to claim 6, wherein the interface standards include an IS-634 standard.

8. A base station subsystem according to claim 2, wherein the plurality of networks (26, 28, 30; 56, 58, 60) comprises a public switched telephone network (30; 60).

9. A base station subsystem according to claim 8, wherein the interface standards include a V 5.x standard.

10. A base station subsystem according to claim 1, wherein the first protocol standard comprises an IS-95 standard.

11. A base station subsystem according to claim 1, wherein the second protocol standard is based on GSM networking protocols.

12. A base station subsystem according to claim 11, wherein the base station subsystem (20; 50) transmits a CDMA message, which is received and decoded by both the first and second mobile stations (22, 24; 52, 54) in idle mode, and a further GSM-CDMA message, which is received and decoded only bv the second mobile station (24; 54).

13. A base station subsystem according to claim 1, wherein the first protocol standard comprises a CDMA2000 standard.

14. A base station subsystem according to claim 1, wherein the second protocol standard comprises a WCDMA standard.

15. A base station subsystem according to claim 1, wherein a common frequency assignment is used for the first and second mobile stations in the cell.

16. The base station subsystem according to claim 1 wherein the or each mobile stations (22, 24; 52, 54) acquires a pilot signal from the at least one base station transceiver (32) to identify the common synchronisation channel from said pilot signal.

17. The base station subsystem according to claim 1 wherein the or each mobile stations (22, 24; 52, 54) acquires a pilot signal from the at least one base station transceiver (32) to identify the common paging channel from said pilot signal.

18. A method for communicating with mobile stations in a mobile wireless telecommunications system, in which a plurality of mobile stations operate in accordance with a plurality of different protocol standards, **characterized in that** the method comprises:
initiating a call over a CDMA-based air interface between a base station subsystem and one of the plurality of mobile stations;
routing the call between the base station and a network in communication with the base station, responsive to the protocol standard of the mobile station; and
transmitting signals to at least one cell using a common synchronization channel and a common paging channel for said one mobile station and at least one other mobile station operating in accordance with another protocol standart to support a condition in which both the one and the other mobile stations camp on said at least one cell..

19. A method according to claim 18, wherein routing the call comprises determining the protocol standard of the mobile station and selecting the one of a plurality of networks responsive to the determination.

20. A method according to claim 19, wherein selecting the one of the plurality of networks comprises selecting a GSM-MAP network.

21. A method according to claim 20, wherein routing the call comprises routing a call via a GSM A-interface.

22. A method according to claim 19, wherein selecting the one of the plurality of networks comprises selecting an IS-41 network.

23. A method according to claim 22, wherein routing the call comprises routing a call via an IS-634 interface.

24. A method according to claim 19, wherein selecting the one of the plurality of networks comprises selecting a public switched telephone network.

25. A method according to claim 24, wherein routing the call comprises routing a call via a V 5.x interface.

26. A method according to claim 18, wherein placing the call comprises placing a call in accordance with an IS-95 protocol standard.

27. A method according to claim 18, wherein placing the call comprises placing a call based on GSM networking protocols.

28. A method according to claim 18, wherein placing the call comprises placing a call in accordance with a CDMA2000 protocol standard.

29. A method according to claim 18, wherein placing the call comprises placing a call in accordance with a WCDMA protocol standard.

30. A method according to claim 18, wherein transmitting the signals comprises using a common frequency assignment for the first and second mobile stations in the cell.

31. A method according to claim 18 comprising acquiring by the or each of the mobile stations of a pilot signal from the at least one base station transceiver and identifying the common synchronisation channel from said pilot signal.

32. A method according to claim 18 comprising acquiring by the or each of the mobile stations of a pilot signal from the at least one base station transceiver and identifying the common paging channel from said pilot signal.

## Patentansprüche

1. Ein Basisstationssubsystem zur Verwendung in einem mobilen drahtlosen Nachrichtensystem, **dadurch gekennzeichnet, dass** das Subsystem Folgendes aufweist:
Mindestens einen Basisstationstransceiver (32), der über eine CDMA basierendes Luftinterface mit einer Vielzahl von Mobilstationen (22, 24; 52, 54) in Verbindung steht, und zwar entsprechend einer Vielzahl von unterschiedlichen Protokollstandards oder Normen arbeitend und mit mindestens einer ersten Mobilstation (22, 52), die entsprechend einem ersten Protokollstandard arbeitet und mit mindestens einer zweiten Mobilstation (24; 54) die entsprechend einem zweiten Protokollstandard arbeitet; und
einen Paging-/ Zugriffsmanager (36), der für jeden Anruf zwischen dem Basisstationssubsystem (20, 50) und einer der Mobilstationen (22, 24; 52, 54) den Anruf über ein Netzwerk (26, 28,30; 56; 58, 60) leitet (routed), und zwar ansprechend auf den Protokollstandard der Mobilstation (22, 26; 52, 54); wobei
ein gemeinsamer Synchronisationskanal und ein gemeinsamer Pagingkanal für die ersten und zweiten Mobilstationen (22, 24; 52, 54) verwendet werden und zwar in mindestens einer Zelle zum Unterstützen eines Zustandes, in dem beide, die ersten und die zweiten Mobilstationen (22, 24; 52, 56) auf der mindestens einen Zelle verweilen ("camp on").

2. Ein Basisstationssubsystem nach Anspruch 1, wobei Folgendes vorgesehen ist: Eine Vielzahl von Anrufverarbeitungseinheiten (38, 40, 42), die das Basisstationssubsystem mit einer Vielzahl von Netzwerken (26, 28,30; 56, 58, 60) koppeln, und zwar gemäß unterschiedlicher entsprechender Interfacestandards.

3. Ein Basisstationssubsystem nach Anspruch 2, wobei der Paging-/Zugriffsmanager (36) die entsprechenden Protokollstandards der Mobilstationen (22, 24; 52, 54), die Anrufe über das Basisstationssubsystem (20; 50) vornehmen, bestimmt und die Anrufe entsprechend zu Anrufverarbeitungseinheiten (38, 40, 42) leitet, die mit den entsprechenden Protokollstandards assoziiert sind.

4. Ein Basisstationssubsystem nach Anspruch 2, wobei die Vielzahl von Netzwerken (26, 28, 30; 56, 58, 60) ein GSM-MAP Netzwerk (28; 58) umfasst.

5. Ein Basisstationssubsystem nach Anspruch 4, wobei die Interfacestandards einen GSM A-Interface-Standard umfassen.

6. Ein Basisstationssubsystem nach Anspruch 2, wobei die Vielzahl der Netzwerke (26, 28, 30; 56, 58,60) ein IS-41 Netzwerk (26; 56) aufweist.

7. Ein Basisstationssubsystem nach Anspruch 6, wobei die InterfaceStandards einen IS-634 Standard aufweisen.

8. Ein Basisstationssubsystem nach Anspruch 2, wobei die Vielzahl von Netzwerken (26, 28, 30; 56, 58, 60) ein öffentliches Telefonnetzwerk ist.

9. Ein Basisstationssubsystem nach Anspruch 8, wobei die InterfaceStandards einen V 5.x Standard umfassen.

10. Ein Basisstationssubsystem nach Anspruch 1 wobei der erste Protokollstandard ein IS-95 Standard ist.

11. Ein Basisstationssubsystem nach Anspruch 1, wobei der zweite Protokollstandard auf GSM-Netzwerk-Protokollen basiert.

12. Ein Basisstationssubsystem nach Anspruch 11, wobei das Basisstationssubsystem (20; 50) eine CDMA-Nachricht überträgt, die von sowohl der ersten als auch der zweiten Mobilstation (22, 24; 52, 54) empfangen und dekodiert wird, und zwar in der Leerlaufbetriebsart, und wobei das Basisstationssubsystem ferner eine GSM-CDMA-Nachricht überträgt, die nur durch die zweite Mobilstation (24, 54) empfangen und dekodiert wird.

13. Ein Basisstationssubsystem nach Anspruch 1, wobei der erste Protokollstandard einen CDMA 2000 Standard umfasst.

14. Ein Basisstationssubsystem nach Anspruch 1, wobei der zweite Protokollstandard einen WCDMA Standard umfasst.

15. Ein Basisstationssubsystem nach Anspruch 1, wobei eine gemeinsame Frequenzzuweisung oder Assignment für die ersten und zweiten Mobilstationen in der Zelle verwendet wird.

16. Ein Basisstationssubsystem nach Anspruch 1, wobei die oder jede Mobilstation (22, 24; 52, 54) ein Pilotsignal von mindestens einem Basisstationstransceiver (32) erfasst, um den gemeinsamen Synchronisationskanal aus dem Pilotsignal zu identifizieren.

17. Ein Basisstationssubsystem nach Anspruch 1, wobei die oder jede Mobilstation (22, 24; 52, 54) ein Pilotsignal von mindestens einem Basisstationstransceiver (32) erfasst, um den gemeinsamen Pagingkanal aus dem erwähnten Pilotsignal zu identifizieren.

18. Ein Verfahren zur Nachrichtenübertragung mit Mobilstationen in einem mobilen drahtlosen Nachrichtensystem, in dem eine Vielzahl von Mobilstationen entsprechend einer Vielzahl von unterschiedlichen Protokollstandards arbeiten, **dadurch gekennzeichnet, dass** das Verfahren Folgendes vorsieht:
Initiieren eines Anrufs über ein CDMA-basierendes Luftinterface zwischen einem Basisstationssubsystem und einer aus einer Vielzahl von Mobilstationen;
Leiten (routing) den Anruf zwischen der Basisstation und einem Netzwerk in Verbindung mit der Basisstation, ansprechend auf den Protokollstandard der Mobilstation; und
Übertragen von Signalen zu mindestens einer Zelle unter Verwendung eines gemeinsamen Synchronisationskanals und eines gemeinsamen Pagingkanals für die erwähnte eine Mobilstation und mindestens eine weitere Mobilstation, die in Übereinstimmung mit einem anderen Protokollstandard arbeitet, um einen Zustand zu unterstützen, in dem sowohl die eine als auch die andere Mobilstation auf der erwähnten mindestens einer Zelle verweilen.

19. Ein Verfahren nach Anspruch 18, wobei das Leiten des Anrufs Folgendes aufweist:
Bestimmen des Protokollstandards der Mobilstation und Auswahl eines einer Vielzahl von Netzwerken ansprechend auf die Bestimmung.

20. Ein Verfahren nach Anspruch 19, wobei die Auswahl des einen der Vielzahl von Netzwerken die Auswahl eines GSM-MAP-Netzwerks aufweist.

21. Ein Verfahren nach Anspruch 20, wobei das Leiten des Anrufs das Leiten eines Anrufs über ein GSM A-Interface umfasst.

22. Ein Verfahren nach Anspruch 19, wobei die Auswahl des einen aus der Vielzahl von Netzwerken die Auswahl eines IS-41-Netzwerkes umfasst.

23. Ein Verfahren nach Anspruch 22, wobei das Leiten des Anrufs das Leiten eines Anrufs über eine IS-634-Interface umfasst.

24. Ein Verfahren nach Anspruch 19, wobei die Auswahl des Netzwerks aus einer Vielzahl von Netzwerken die Auswahl eines öffentlichen Netzwerks umfasst.

25. Ein Verfahren nach Anspruch 24, wobei das Leiten des Anrufs das Leiten eines Anrufs über ein V 5.x-Interface umfasst.

26. Ein Verfahren nach Anspruch 18, wobei das Vornehmen des Anrufs das Vornehmen eines Anrufs entsprechend einem IS-95 Protokollstandard umfasst.

27. Ein Verfahren nach Anspruch 18, wobei das Vornehmen des Anrufs das Vornehmen eines Anrufs basierend auf GSM-Netzwerkprotokollen umfasst.

28. Ein Verfahren nach Anspruch 18, wobei das Vornehmen des Anrufs das Vornehmen eines Anrufs entsprechend einem CDMA 2000 Protokollstandard umfasst.

29. Ein Verfahren nach Anspruch 18, wobei das Vornehmen des Anrufs das Vornehmen eines Anrufs entsprechend einem WCDMA Protokollstandard umfasst.

30. Ein Verfahren nach Anspruch 18, wobei die Übertragung der Signale Folgendes aufweist:
Verwenden einer gemeinsamen Frequenzzuweisung für die ersten und zweiten Mobilstationen in der Zelle.

31. Ein Verfahren nach Anspruch 18, wobei Folgendes vorgesehen ist:
Erfassen durch die Mobilstation oder jede der Mobilstationen eines Pilotsignales von mindestens einem Basisstationstransceiver und identifizieren des gemeinsamen Synchronisationskanals aus dem Pilotsignal.

32. Ein Verfahren nach Anspruch 18, wobei Folgendes vorgesehen ist:
Erfassen durch die Mobilstation oder jede der Mobilstationen von einem Pilotsignal von mindestens einem Basisstationstransceiver und identifizieren des gemeinsamen Pagingkanals aus dem Pilotsignal.

## Revendications

1. Sous-système de station de base destiné à être utilisé dans un système de télécommunication mobile sans fil, **caractérisé en ce qu'**il comprend :
au moins un émetteur-récepteur de station de base (32) qui communique sur une interface aérienne en technique CDMA. avec une pluralité de postes mobiles (22, 24 ; 52, 54) fonctionnant selon une pluralité de protocoles normalisés différents, incluant au moins un premier poste mobile (22, 52) fonctionnant selon un premier protocole normalisé et au moins un second poste mobile (24, 54) fonctionnant selon un second protocole normalisé ; et
un gestionnaire de téléavertissement/accès (36) qui, pour chaque appel entre le sous-système de station de base (20, 50) et l'un des postes mobiles (22, 24 ; 52, 54) achemine l'appel par l'intermédiaire d'un réseau (26, 28, 30 ; 56, 58, 60) agissant en réponse au protocole normalisé des postes mobiles (22, 24 ; 52, 54), un canal de synchronisation commun et un canal de téléavertissement commun étant utilisés pour les premier et second postes mobiles (22, 24 ; 52, 54) dans au moins une cellule pour permettre un état dans lequel les premier et second postes mobiles (22, 24 ; 52, 54) se trouvent dans ladite au moins une cellule.

2. Sous-système de station de base selon la revendication 1, comprenant une pluralité de modules de traitement d'appel (38, 40, 42) qui couplent le sous-système de station de base (20 ; 50) à une pluralité de réseaux (26, 28, 30 ; 52, 58, 60) en fonction de divers protocoles normalisés respectifs différents.

3. Sous-système de station de base selon la revendication 2, dans lequel le gestionnaire de téléavertissement/accès (36) détermine les protocoles normalisés respectifs des postes mobiles (22, 24 ; 52, 54) plaçant des appels par l'intermédiaire du sous-système de station de base (20 ; 50) et achemine les appels en conséquence pour appeler les modules de traitement (38, 40, 42) qui sont associés aux protocoles normalisés respectifs.

4. Sous-système de station de base selon la revendication 2, dans lequel la pluralité de réseaux (26, 28, 30 ; 56, 58, 60) comprend un réseau GSM-MAP (28 ; 58).

5. Sous-système de station de base selon la revendication 4, dans lequel les normes d'interface incluent une norme d'interface GSM-A.

6. Sous-système de station de base selon la revendication 2, dans lequel la pluralité de réseaux (26, 28, 30 ; 56, 58, 60) comprend un réseau IS-41 (26 ; 56).

7. Sous-système de station de base selon la revendication 6, dans lequel l'interface normalisée inclut une norme IS-634.

8. Sous-système de station de base selon la revendication 2, dans lequel la pluralité de réseaux (26, 28, 30 ; 56, 58, 60) comprend un réseau téléphonique commuté public (30 ; 60) .

9. Sous-système de station de base selon la revendication 8, dans lequel l'interface normalisée inclut une norme V-5x.

10. Sous-système de station de base selon la revendication 1, dans lequel le premier protocole normalisé comprend une norme IS-95.

11. Sous-système de station de base selon la revendication 1, dans lequel le second protocole normalisé est basé sur des protocoles de réseaux GSM.

12. Sous-système de station de base selon la revendication 11, dans lequel le sous-système de station de base (20 ; 50) émet un message CDMA qui est reçu et décodé par les premier et second postes mobiles (22, 24 ; 52, 54) dans un mode de repos et un autre message GSM CDMA qui est reçu et décodé seulement par le second poste mobile (24 ; 54) .

13. Sous-système de station de base selon la revendication 1, dans lequel le premier protocole normalisé comprend une norme CDMA 2000.

14. Sous-système de station de base selon la revendication 1, dans lequel le second protocole normalisé comprend une norme WCDMA.

15. Sous-système de station de base selon la revendication 1, dans lequel une affectation de fréquence commune utilisée pour les premier et second postes mobiles de la cellule.

16. Sous-système de station de base selon la revendication 1, dans lequel le ou chacun des postes mobiles (22, 24 ; 52, 54) acquiert un signal pilote à partir dudit au moins un émetteur-récepteur de station de base (32) pour identifier le canal de synchronisation commun à partir du signal pilote.

17. Sous-système de station de base selon la revendication 1, dans lequel le ou chacun des postes mobiles (22, 24 ; 52, 54) acquiert un signal pilote à partir dudit au moins un émetteur-récepteur de station de base (32) pour identifier le canal de téléavertissement commun à partir du signal pilote.

18. Procédé de communication avec des postes mobiles dans un système de télécommunication mobile sans fil dans lequel une pluralité de postes mobiles fonctionne selon une pluralité de protocoles normalisés différents, **caractérisé en ce que** ce procédé comprend :
initier un appel sur une interface aérienne en technique CDMA. entre un sous-système de station de base et l'un de la pluralité de postes mobiles ;
acheminer l'appel entre la station de base et un réseau en communication avec la station de base en réponse au protocole normalisé du poste mobile ; et
émettre des signaux vers au moins une cellule en utilisant un canal de synchronisation commun et un canal de téléavertissement commun pour ledit un poste mobile et au moins un autre poste mobile fonctionnant en accord avec un autre protocole normalisé pour permettre un état dans lequel le premier et l'autre poste mobile se trouvent sur ladite au moins une cellule.

19. Procédé selon la revendication 18, dans lequel le routage de l'appel comprend la détermination du protocole normalisé du poste mobile et la sélection de l'un d'une pluralité de réseaux en réponse à ladite détermination.

20. Procédé selon la revendication 19, dans lequel la sélection de l'un de la pluralité de réseaux comprend la sélection d' un réseau GSM-MAP.

21. Procédé selon la revendication 20, dans lequel le routage de l'appel comprend le routage d' un appel par une interface GSM-A.

22. Procédé selon la revendication 19, dans lequel la sélection de l'un de la pluralité de réseaux comprend la sélection d'un réseau IS-41.

23. Procédé selon la revendication 22, dans lequel le routage de l'appel comprend le routage d' un appel par une interface IS-634.

24. Procédé selon la revendication 19, dans lequel la sélection de l'un de la pluralité de réseaux comprend la sélection d'un réseau téléphonique public commuté.

25. Procédé selon la revendication 24, dans lequel le routage de l'appel comprend le routage d'un appel par une interface V5.

26. Procédé selon la revendication 18, dans lequel le placement de l'appel comprend le placement d'un appel selon le protocole normalisé IS-95.

27. Procédé selon la revendication 18, dans lequel le placement de l'appel comprend le placement d'un appel sur la base des protocoles de réseaux GSM.

28. Procédé selon la revendication 18, dans lequel le placement de l'appel comprend le placement d'un appel selon le protocole normalisé CDMA 2000.

29. Procédé selon la revendication 18, dans lequel le placement de l'appel comprend le placement d'un appel selon le protocole normalisé WCDMA.

30. Procédé selon la revendication 18, dans lequel l'émission des signaux comprend l'utilisation d'une affectation de fréquence commune pour les premier et second postes mobiles de la cellule.

31. Procédé selon la revendication 18, comprenant l'acquisition par le ou chacun des postes mobiles d'un signal pilote à partir dudit au moins un émetteur-récepteur de station de base et l'identification du canal de synchronisation commun à partir du signal pilote.

32. Procédé selon la revendication 18, comprenant l'acquisition par le ou chacun des postes mobiles d'un signal pilote à partir dudit au moins un émetteur-récepteur de station de base et l'identification du canal de téléavertissement conmun à partir du signal pilote.
